# EUROPÄISCHE PATENTSCHRIFT

(11) **EP 3 693 252 B1**
(45) Veröffentlichungstag und Bekanntmachung des Hinweises auf die Patenterteilung: **05.05.2021**
(21) Anmeldenummer: 20167116.1
(22) Anmeldetag: 09.03.2013
(51) Int. Cl.: B62D 21/00, B62D 21/02, B62D 53/08

(54) **RAHMENTRAGSTRUKTUR MIT NACH OBEN GEKRÖPFTEN TRAGABSCHNITTEN**
FRAME SUPPORT STRUCTURE WITH UPWARDLY BENT SUPPORTING SECTIONS
STRUCTURE PORTEUSE DE CADRE POURVUE DE SECTIONS PORTEUSES COURBÉES VERS LE HAUT

(30) Priorität: 13.07.2012 DE 102012013910
(43) Veröffentlichungstag der Anmeldung: 12.08.2020
(62) Teilanmeldung aus: 13001185.1
(73) Patentinhaber: MAN Truck & Bus SE, 80995 München (DE)
(72) Erfinder: Sattler, Steve, 80995 München (DE); Hintereder, Jürgen, 80995 München (DE)
(74) Vertreter: v. Bezold & Partner Patentanwälte - PartG mbB

(56) Entgegenhaltungen:
- WO-A2-2010/081997
- DE-B3- 10 353 235
- FR-A1- 2 941 201
- US-A1- 2003 178 834
- US-A1- 2009 267 337

## Beschreibung

Die Erfindung betrifft eine Rahmentragstruktur für ein Nutzfahrzeug, insbesondere Lastkraftwagen, vorzugsweise Sattelzugmaschine.

Rahmentragstrukturen, insbesondere Fahrgestelle, für Sattelzugmaschinen sind in den unterschiedlichsten Ausführungsformen bekannt. Die Rahmentragstrukturen sind meist leiterahmenförmig ausgebildet und umfassen üblicherweise zwei Längsträger und mehrere Querträger. Die Vorderräder der Nutzfahrzeuge können über Radaufhängungen mit den Rahmentragstrukturen verbunden sein. Die Radaufhängungen umfassen üblicherweise Feder- und/oder Dämpferelemente, deren im Wesentlichen vertikal wirkenden Kräfte über Umlenkkonsolen quasi von oben in die Rahmentragstrukturen eingeleitet werden. Die Umlenkkonsolen werden stark auf Biegung beansprucht, weshalb sie massiv ausgeführt werden müssen. Zudem beanspruchen die Umlenkkonsolen Platz, der anderweitig genutzt werden könnte Die FR 2 941 201 A1 zeigt eine solche Rahmenstruktur, von der die Erfindung ausgeht.

Eine Aufgabe der Erfindung ist es, eine verbesserte und/oder alternative Rahmentragstruktur für ein Nutzfahrzeug zu schaffen.

Diese Aufgabe kann insbesondere mit den Merkmalen des Hauptanspruchs gelöst werden. Vorteilhafte Weiterbildungen sind den Unteransprüchen zu entnehmen.

Die Erfindung schafft eine Rahmentragstruktur für ein Nutzfahrzeug, insbesondere einen Lastkraftwagen, vorzugsweise eine Sattelzugmaschine. Die Rahmentragstruktur dient vorzugsweise mitunter zum Tragen eines Fahrerhauses. Die Rahmentragstruktur umfasst eine erste längsverlaufende Tragkonstruktion und eine zweite längsverlaufende Tragkonstruktion, die in Querrichtung der Rahmentragstruktur voneinander beabstandet sind. Die Rahmentragstruktur umfasst ferner zwei Radaufhängungen für die Vorderräder für das Nutzfahrzeug und zumindest eine Tankeinrichtung zur Fluidaufnahme (z.B. ein Kraftstofftank und/oder ein Lufttank). Die Radaufhängungen dienen insbesondere dazu, die Vorderräder mit der Rahmentragstruktur zu verbinden.

Die Rahmentragstruktur zeichnet sich dadurch aus, dass die erste Tragkonstruktion und die zweite Tragkonstruktion nach oben geführt sind, um eine erhabene Tragstruktur auszubilden. Die erhabene Tragstruktur kann zusätzlich zu der ersten Tragkonstruktion und der zweiten Tragkonstruktion z.B. eine Queraussteifungsstruktur und/oder Konsolen umfassen.

Es ist möglich, dass die erhabene Tragstruktur zwischen Vorderrädern für das Nutzfahrzeug verläuft und somit insbesondere eine vordere Tragstruktur bildet. Die erhabene Tragstruktur kann insbesondere über Radmittelpunkte der Vorderräder nach vorne hinausragen.

Die erhabene Tragstruktur kann z.B. dazu dienen, ein Fahrerhaus für das Nutzfahrzeug zu tragen, das zweckmäßig über der erhabenen Tragstruktur platziert werden kann.

Es ist möglich, dass die erhabene Tragstruktur über Feder- und/oder Dämpferelementen der Radaufhängungen verläuft, insbesondere oben auf oberen Enden der Feder- und/oder Dämpferelemente der Radaufhängungen angeordnet ist.

Die erhabene Tragstruktur kann insbesondere dazu dienen, zweckmäßig im Wesentlichen vertikal wirkende Kräfte aus den Feder- und/oder Dämpferelementen aufzunehmen und zwar vorzugsweise von unten. Die Kräfte aus den Feder- und/oder Dämpferelementen können z.B. in die erste Tragkonstruktion, die zweite Tragkonstruktion, die Queraussteifungsstruktur und/oder die Konsolen eingeleitet werden.

Es ist möglich, dass die erhabene Tragstruktur zusätzlich nach seitlich innen geführt ist, um eine verschmälerte Tragstruktur zu bilden. Ebenso ist es möglich, dass die erhabene Tragstruktur zusätzlich nach seitlich außen geführt ist, um eine aufgeweitete Tragstruktur zu bilden.

Die erste Tragkonstruktion und die zweite Tragkonstruktion bilden ferner vorzugsweise eine vertiefte Tragstruktur, die in Längsrichtung der Rahmentragstruktur hinter der erhabenen Tragstruktur verläuft. Die vertiefte Tragstruktur kann eine mittlere und/oder hintere Tragstruktur darstellen und z.B. über Radmittelpunkte für die Hinterräder für das Nutzfahrzeug nach hinten hinausragen.

Die Rahmentragstruktur kann eine dritte längsverlaufende Tragkonstruktion umfassen. Die dritte Tragkonstruktion verläuft vorzugsweise zwischen und/oder unter dem Niveau der erhabenen Tragstruktur.

Es ist möglich, dass die dritte Tragkonstruktion mit den Radaufhängungen für die Vorderräder verbunden ist. Insbesondere kann die dritte Tragkonstruktion mit Lenkelementen (z.B. Quer-, Schräg- und/oder Längslenkerelemente) der Radaufhängungen verbunden sein.

Die dritte Tragkonstruktion dient vorzugsweise dazu, Kräfte aus den Radaufhängungen aufzunehmen, insbesondere z.B. im Wesentlichen horizontal wirkende Kräfte aus den Lenkelementen der Radaufhängungen. Dazu verläuft die dritte Tragkonstruktion vorzugsweise im Wesentlichen auf dem Niveau der Lenkelemente.

Es ist möglich, dass die erste Tragkonstruktion und die zweite Tragkonstruktion mittels eines S-Schlags nach seitlich außen, nach seitlich innen und/oder nach oben geführt sind. Der jeweilige S-Schlag kann durchlaufend einstückig ausgeführt sein und somit aus einem einzigen integralen Bauteil erzeugt werden. Beispielsweise können die S-Schläge mittels eines Biege- oder Abkantvorgangs erzeugt werden. Alternativ kann der jeweilige S-Schlag aus mehreren miteinander verbundenen (z.B. verschraubter, verschweißter, etc.) Bauteilen erzeugt werden. Die S-Schläge können Kröpfungs- oder Versatzabschnitte umfassen, die die erhabene Tragstruktur und die vertiefte Tragstruktur miteinander verbinden. Die Kröpfungs- oder Versatzabschnitte können sich im Wesentlichen in Vertikalrichtung der Rahmentragstruktur, diagonal oder gekrümmt erstrecken. Die S-Schläge können somit durch zumindest zwei Knick- oder Biegestellen und optional einer Wendepunktstelle gebildet werden.

Es ist möglich, dass die Tankeinrichtung als mittragender Teil der Rahmentragstruktur ausgeführt ist. Zu diesen Zweck kann die Tankeinrichtung mit Verstärkungsmitteln versehen sein, z.B. Verstärkungsverstrebungen, Verstärkungsrippen, Verstärkungsplatten, etc.. Die Tankeinrichtung kann z.B. dazu dienen, ein Fahrerhaus für das Nutzfahrzeug oder zumindest Teile davon zu tragen. Ebenso kann die Tankeinrichtung als Unterbau (z.B. Bodenplatte) für das Fahrerhaus dienen.

Es ist möglich, dass die Tankeinrichtung insbesondere als mittragender Teil der ersten Tragkonstruktion und der zweiten Tragkonstruktion wirkt, als Queraussteifungskonstruktion wirkt, als Tragvorrichtung zum Tragen einer Motor- und/oder Getriebeeinrichtung dient und/oder zur Aufnahme von Radaufhängungskräften aus Radaufhängungen für die Vorderräder des Nutzfahrzeugs dient.

Vorzugsweise ist die Tankeinrichtung zumindest abschnittsweise zwischen der erhabenen Tragstruktur angeordnet und kann z.B. einen Teil der erhabenen Tragstruktur bilden.

Die Tankeinrichtung verbindet vorzugsweise die erste Tragkonstruktion mit der zweiten Tragkonstruktion. Die Tankeinrichtung ist insbesondere im Wesentlichen hohlplattenförmig ausgeführt.

Die Rahmentragstruktur kann eine Queraussteifungskonstruktion umfassen, die zweckmäßig die erste Tragkonstruktion und die zweite Tragkonstruktion verbindet und die insbesondere zugleich als Lufttank für das Nutzfahrzeug dient. Die Queraussteifungskonstruktion kann im Wesentlichen hohlplattenförmig ausgeführt sein.

Die erste Tragkonstruktion, die zweite Tragkonstruktion und/oder die dritte Tragkonstruktion können zumindest abschnittsweise z.B. aus Hohlprofilelementen ausgeführt sein, z.B. runden oder rechteckförmigen Hohlprofilelementen. Alternativ oder ergänzend können sie auch z.B. aus U-, I- oder L-Profilelementen ausgeführt werden.

Die Erfindung umfasst außerdem ein Nutzfahrzeug, insbesondere einen Lastkraftwagen, vorzugsweise eine Sattelzugmaschine, mit einer wie hierin beschriebenen Rahmentragstruktur.

Zu erwähnen ist, dass das Merkmal "zwischen" vorzugsweise so zu verstehen ist, dass es insbesondere die Positionierung in Querrichtung und/oder in Längsrichtung der Rahmentragstruktur definiert, während die Positionierung in Vertikalrichtung der Rahmentragstruktur nicht eingeschränkt wird, es sei denn, die Positionierung in Vertikalrichtung wird ausdrücklich spezifiziert.

Zu erwähnen ist auch, dass das Merkmal "mittragend" vorzugsweise so zu verstehen ist, dass es insbesondere verstärkend, aussteifend, tragend, fahrwerkslastenweiterleitend und/oder abstützend wirkt oder zumindest mitwirkt.

Zu erwähnen ist ferner, dass die erfindungsgemäße Rahmentragstruktur bzw. die erste Tragkonstruktion und die zweite Tragkonstruktion insbesondere nicht auf zumindest abschnittsweise aus Tragprofilelementen (z.B. Hohl-, U-, I- oder L-Tragprofilelemente) ausgeführte (z.B. leiterrahmenförmige) Ausführungsformen beschränkt ist, sondern z.B. auch zumindest abschnittsweise monocoqueförmige oder semi-monocoqueförmige Ausführungsformen umfasst. Darunter werden insbesondere schalenförmige Strukturen verstanden, die zweckmäßig selbsttragend ausgebildet sind (z.B. aus Blech-, Tiefzieh- oder Verbundmaterial).

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Ansicht einer Rahmentragstruktur für ein Nutzfahrzeug gemäß einer Ausführungsform der Erfindung,
- Fig. 2: zeigt eine Seitenschnittansicht der Rahmentragstruktur der Fig. 1,
- Fig. 3: zeigt eine Draufsicht auf die Rahmentragstruktur der Figuren 1 und 2,
- Fig. 4: zeigt eine Schnittansicht der Rahmentragstruktur der Figuren 1 bis 3,
- Fig. 5: zeigt eine perspektivische Ansicht einer Rahmentragstruktur gemäß einer anderen Ausführungsform der Erfindung,
- Fig. 6: zeigt eine Seitenschnittansicht der Rahmentragstruktur der Fig. 5,
- Fig. 7: zeigt eine Draufsicht auf die Rahmentragstruktur der Figuren 5 und 6,
- Fig. 8: zeigt eine Schnittansicht der Rahmentragstruktur der Figuren 5 bis 7,
- Fig. 9: zeigt eine perspektivische Ansicht einer Rahmentragstruktur gemäß einer anderen Ausführungsform der Erfindung, und
- Fig. 10: zeigt eine Draufsicht auf die Rahmentragstruktur der Fig. 9.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

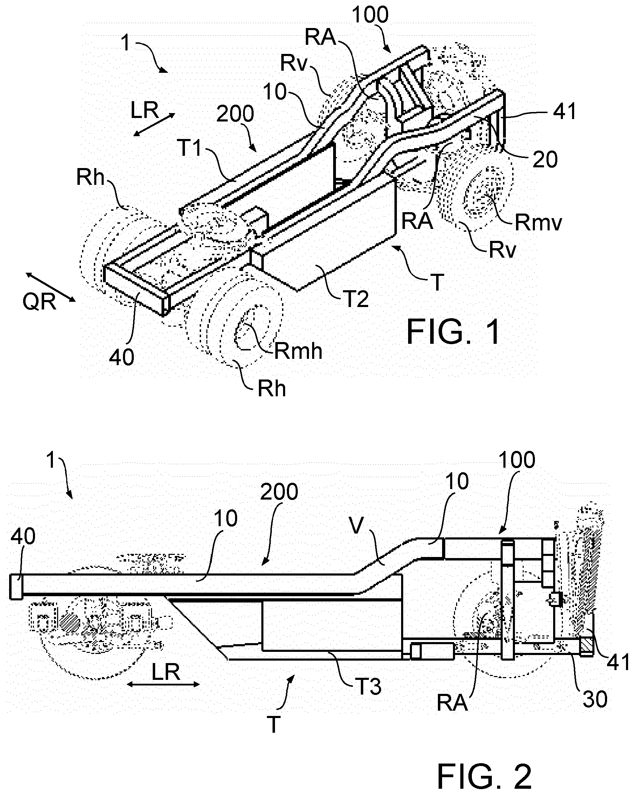

Figur 1 zeigt eine perspektivische Ansicht einer ein Fahrgestell für eine Zugmaschine (Sattelzugmaschine) bildende Rahmentragstruktur 1, die mit einer Sattelplatte versehen ist und mitunter zum Tragen eines Fahrerhauses (nicht dargestellt) für die Zugmaschine dient.

Die Rahmentragstruktur 1 umfasst eine erste in Längsrichtung LR der Rahmentragstruktur 1 verlaufende Tragkonstruktion 10 und eine zweite in Längsrichtung LR der Rahmentragstruktur 1 verlaufende Tragkonstruktion 20, die in Querrichtung QR der Rahmentragstruktur voneinander beabstandet sind und als Rechteckhohlprofile ausgebildet sind. Die Rahmentragstruktur 1 umfasst ferner mehrere Querträger, z.B. einen hinteren Querträger 40 und einen vorderen Querträger 41, die ebenfalls als Rechteckhohlprofile ausgeführt sind und mit der ersten Tragkonstruktion 10 und der zweiten Tragkonstruktion 20 verbunden sind.

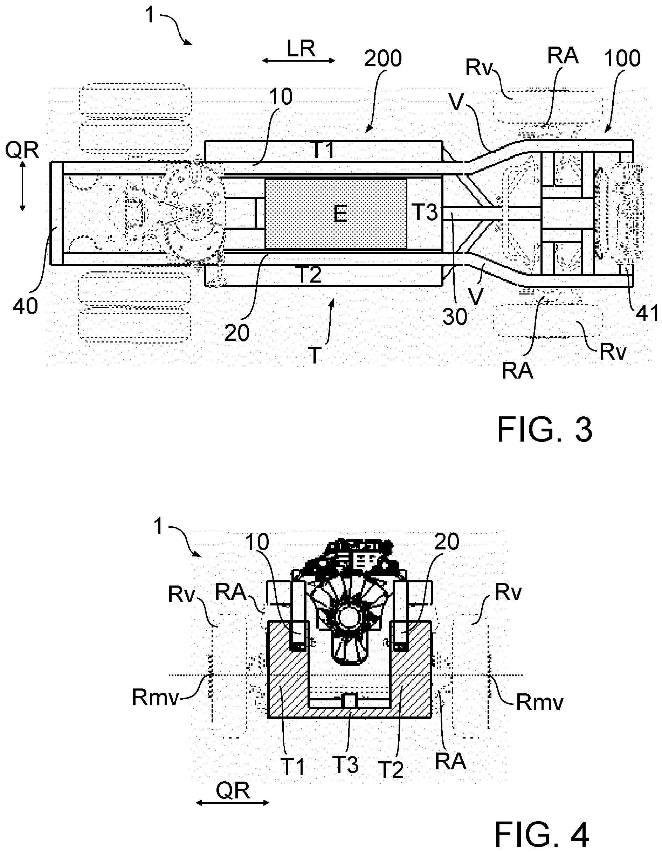

Die Rahmentragstruktur 1 ist frontseitig mit einer Kühlanordnung versehen, die einen Motorkühler und einen Ladeluftkühler umfasst. Die Rahmentragstruktur 1 ist zudem mit lenkbaren Vorderrädern Rv und einer Hinterachse mit Hinterrädern Rh versehen. Die Vorderräder Rv sind über Radaufhängungen RA mit der Rahmentragstruktur 1 verbunden und umfassen Radmittelpunkte Rmv, um die sie drehbar sind. Ähnlich umfassen die Hinterräder Rh Radmittelpunkte Rmh, um die sie drehbar sind. Die Hinterräder Rh sind zwillingsbereift, können aber auch einzelbereift ausgeführt werden. Ebenso ist es möglich, dass die Rahmentragstruktur 1 mit mehr als einer Hinterachse versehen wird. Die Rahmentragstruktur 1 kann zudem z.B. mit einem Dieselmotor (in Figur 3 schematisch dargestellt), ggf. weiteren Antriebsaggregaten, einem Antriebsstrang, etc. versehen werden. Die Rahmentragstruktur 1 umfasst ferner eine als Kraftstofftank T ausgeführte Tankeinrichtung, die durch drei im Wesentlichen hohlplattenförmige Tankabschnitte T1, T2 und T3 (siehe z.B. Figur 3) ausgebildet wird, die eine im Wesentlichen U-förmige Gestalt bilden. Der Kraftstofftank T fasst die erste Tragkonstruktion 10 und die zweite Tragkonstruktion 20 von seitlich außen und von unten ein. Der zuvor erwähnte Dieselmotor kann zwischen den drei Tankabschnitten T1, T2 und T angeordnet werden und somit von denselbigen von unten und von seitlich außen eingefasst werden.

Der Kraftstofftank T verbindet die erste Tragkonstruktion 10 und die zweite Tragkonstruktion 20 und kann als mittragender Teil der Rahmentragstruktur 1, insbesondere als Queraussteifungskonstruktion oder zumindest Teil davon wirken. Zu diesem Zweck kann der Kraftstofftank T mit Verstärkungsmitteln, etwa Verstärkungsstreben, Verstärkungsrippen, etc. versehen werden. Der Kraftstofftank T weist zudem Durchlassaussparungen auf, die von der ersten Tragkonstruktion 10 und der zweiten Tragkonstruktion 20 durchlaufen werden.

Die erste Tragkonstruktion 10 und die zweite Tragkonstruktion 20 sind nach oben geführt und bilden eine erhabene Tragstruktur 100 aus. Die erhabene Tragstruktur 100 erstreckt sich zwischen den Vorderrädern Rv und bildet eine vordere Tragstruktur, die über die Radmittelpunkte Rmv der Vorderräder Rv nach vorne hinausragt. Die erhabene Tragstruktur 100 dient dazu, ein Fahrerhaus für das Nutzfahrzeug zu tragen, das über der erhabenen Tragstruktur 100 platziert wird.

Die Radaufhängungen RA weisen Feder- und/oder Dämpferelemente auf. Die erhabene Tragstruktur 100 ist über die Feder- und/oder Dämpferelemente geführt und dient dazu, deren im Wesentlichen vertikal wirkenden Kräfte von unten aufzunehmen. Insbesondere sind die erste Tragkonstruktion 10 und die zweite Tragkonstruktion 20 oben auf oben Enden der Feder- und/oder Dämpferelemente angeordnet. Es ist aber ebenso möglich, dass die erhabene Tragstruktur 100 zusätzlich zu der ersten Tragkonstruktion 10 und der zweiten Tragkonstruktion 20 z.B. eine Queraussteifungsstruktur, Konsolen, etc. umfasst, die über die Feder- und/oder Dämpferelemente geführt sind und dazu dienen, deren im Wesentlichen vertikal wirkenden Kräfte von unten aufzunehmen.

Die erste Tragkonstruktion 10 und die zweite Tragkonstruktion 20 bilden eine vertiefte Tragstruktur 200 aus, die in Längsrichtung LR der Rahmentragstruktur 1 hinter der erhabenen Tragstruktur 100 verläuft und sich bis über die Radmittelpunkte Rmh der Hinterräder Rh hinaus nach hinten erstreckt und somit eine mittlere und hintere Tragstruktur bildet. Der Kraftstofftank T ist entlang der vertieften Tragstruktur 200 angeordnet.

Figur 2 zeigt eine Seitenschnittansicht der Rahmentragstruktur 1 der Figur 1. Figur 2 ist z.B. zu entnehmen, dass die erste Tragkonstruktion 10 und die zweite Tragkonstruktion 20 mittels eines durchlaufenden, einstückigen S-Schlags nach oben geführt ist, um die erhabene Tragstruktur 100 zu bilden. Die S-Schläge umfassen Kröpfungs- oder Versatzabschnitte V, die die erhabene Tragstruktur 100 mit der vertieften Tragstruktur 200 verbinden und gekrümmt oder geradlinig verlaufen können.

Die Rahmentragstruktur 1 umfasst ferne eine dritte längsverlaufende Tragkonstruktion 30, die zwischen der erhabenen Tragstruktur 100 und unter deren Niveau verläuft. Die dritte Tragkonstruktion 30 ist als Rechteckhohlprofil ausgeführt und mit den Radaufhängungen RA der Vorderräder Rv verbunden. Die dritte Tragkonstruktion 30 ist insbesondere mit den Lenkelementen der Radaufhängungen RA verbunden und dient dazu, im Wesentlichen horizontal wirkende Kräfte aus den Lenkelementen aufzunehmen. Die dritte Tragkonstruktion 30 verläuft im Wesentlichen auf dem Niveau der Lenkelemente.

Somit werden die im Wesentlichen vertikal wirkenden Kräfte aus den Radaufhängungen RA in die erhabene Tragstruktur 100 eingeleitet und die im Wesentlichen horizontal wirkenden Kräfte aus den Radaufhängungen RA werden in die dritte Tragkonstruktion 30 eingeleitet.

Die erste Tragkonstruktion 10, die zweite Tragkonstruktion 20 und die dritte Tragkonstruktion 30 sind über den Querträger 41, der eine im Wesentlichen U-förmige Gestalt bildet, miteinander verbunden.

Figur 3 zeigt eine Draufsicht auf die Rahmentragstruktur 1 der Figuren 1 und 2. Figur 3 ist insbesondere zu entnehmen, dass die erhabene Tragstruktur 100 nicht nur nach oben geführt ist, um eine erhabene Tragstruktur 100 zu bilden, sondern auch nach seitlich außen geführt ist, um eine aufgeweitete Tragstruktur zu bilden.

Figur 3 zeigt außerdem, dass die dritte Tragkonstruktion 30 zusätzlich mit dem Kraftstofftank T verbunden ist, um den Kraftstofftank T von unten abstützen zu können.

Figur 3 zeigt ferner eine stark schematisch dargestellte Motoreinrichtung E zum Antreiben des Nutzfahrzeugs (z.B. einen Dieselmotor). Die Motoreinrichtung E ist zwischen der vertieften Tragkonstruktion 200 angeordnet und wird von seitlich außen und von unten durch den Kraftstofftank T eingefasst. Der Kraftstofftank T dient dazu, die Motoreinrichtung E zu tragen.

Figur 4 zeigt eine Schnittansicht der Rahmentragstruktur 1 der Figuren 1 bis 3 in Längsrichtung LR nach vorne. Figur 4 ist insbesondere zu entnehmen, dass der Kraftstofftank T eine im Wesentlichen U-förmige Gestalt bildet und der erste Tankabschnitt T1 von der ersten Tragkonstruktion 10 und der zweite Tankabschnitt T2 von der zweiten Tragkonstruktion 20 durchlaufen werden.

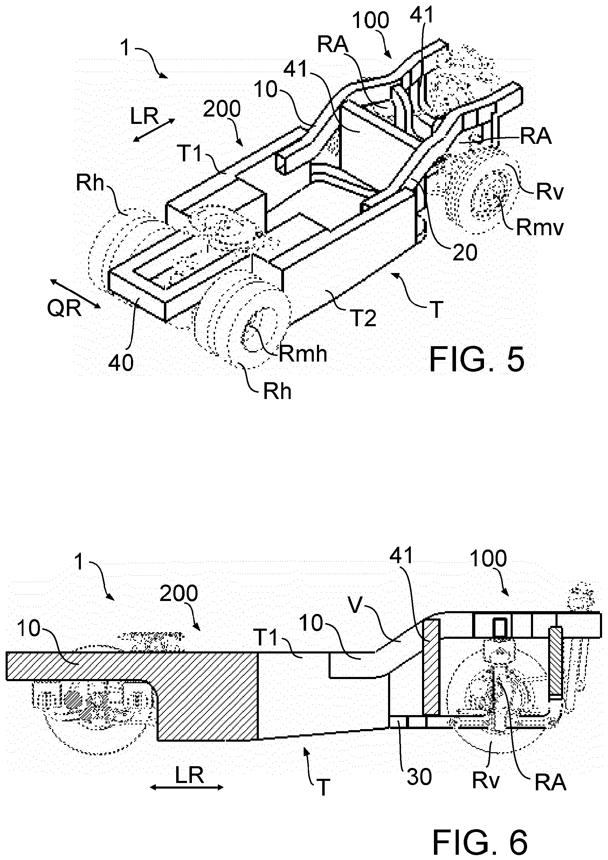

Figur 5 zeigt eine perspektivische Ansicht einer Rahmentragstruktur 1 gemäß einer anderen Ausführungsform der Erfindung. Eine Besonderheit der in Figur 5 gezeigten Rahmentragstruktur 1 ist, dass der Kraftstofftank T einen ersten im Wesentlichen hohlplattenförmigen Tankabschnitt T1, der baulich in die erste Tragkonstruktion 10 integriert ist, und einen zweiten im Wesentlichen hohlplattenförmigen Tankabschnitt T2, der baulich in die zweite Tragkonstruktion 20 integriert ist, umfasst. Der Kraftstofftank T ist somit mittragender Teil der ersten Tragkonstruktion 10 und der zweiten Tragkonstruktion 20 und bildet Tanklängsträger aus. Die Tanklängsträger sind Teil der vertieften Tragstruktur 200.

Eine weitere Besonderheit der in Figur 5 gezeigten Rahmentragstruktur 1 ist die Queraussteifungskonstruktion 41, die im Wesentlichen hohlplattenförmig ausgebildet ist. Die Queraussteifungskonstruktion 41 verbindet die erste Tragkonstruktion 10 und die zweite Tragkonstruktion 20 und dient zusätzlich zu der Queraussteifungsfunktion als Lufttank für das Nutzfahrzeug. Die Queraussteifungskonstruktion 41 ist in Längsrichtung LR der Rahmentragstruktur 1 vor der Motoreinrichtung E zum Antreiben des Nutzfahrzeugs angeordnet. Die Queraussteifungskonstruktion 41 kann mit zumindest einer Lüftungsöffnung versehen sein, die dazu dient, die Motoreinrichtung zur Kühlung mit Fahrtluft zu versorgen.

Figur 6 zeigt eine Seitenschnittansicht der Rahmentragstruktur 1 der Figur 5. Figur 6 ist z.B. zu entnehmen, dass die Queraussteifungskonstruktion 41 nicht nur mit der ersten Tragkonstruktion 10 und der zweiten Tragkonstruktion 20 verbunden ist, sondern auch mit der dritten Tragkonstruktion 30.

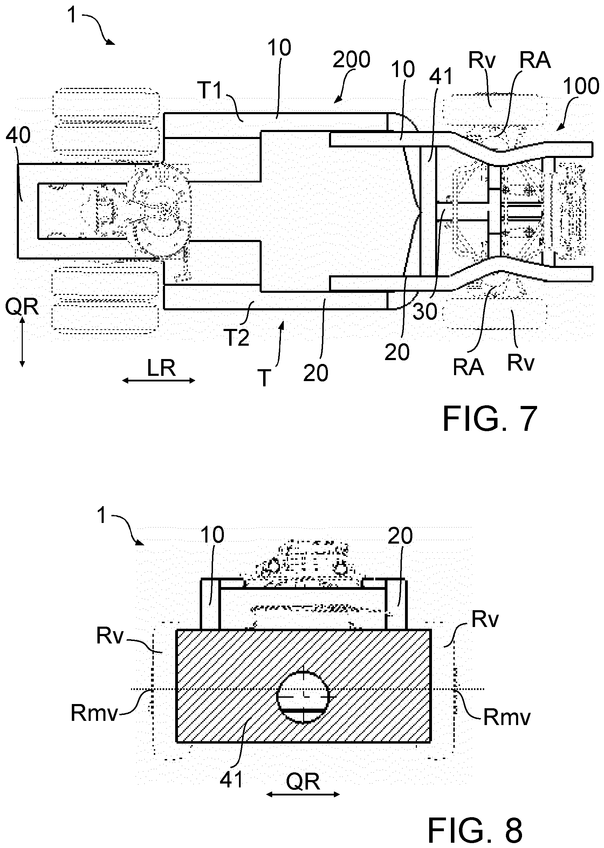

Figur 7 ist eine Draufsicht auf die Rahmentragstruktur 1 der Figuren 5 und 6. Figur 7 kann z.B. entnommen werden, dass die erhabene Tragstruktur 100 zusätzlich nach seitlich innen geführt ist, um eine verschmälerte Tragstruktur zu bilden.

Figur 8 zeigt eine Schnittansicht der Rahmentragstruktur 1 der Figuren 5 bis 7 in Längsrichtung LR nach vorne. Die in Figur 8 gezeigte Queraussteifungskonstruktion 41 ist mit einer Lüftungsöffnung versehen, die dazu dient, die Motoreinrichtung E zur Kühlung mit Fahrtluft zu versorgen.

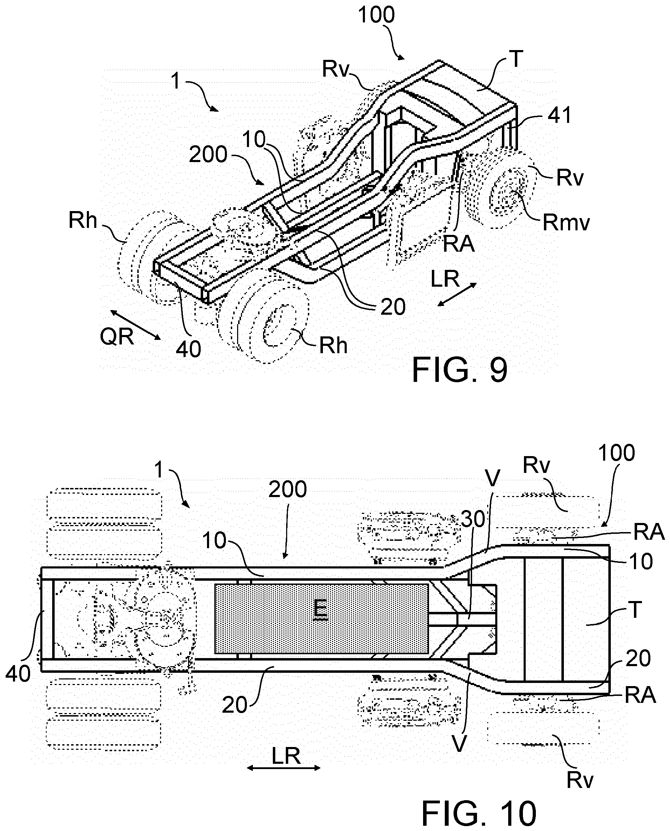

Figur 9 zeigt eine perspektivische Ansicht einer Rahmentragstruktur 1 gemäß einer noch anderen Ausführungsform der Erfindung. Eine Besonderheit der in Figur 9 gezeigten Rahmentragstruktur 1 ist, dass der Kraftstofftank T einen im Wesentlichen horizontal ausgerichteten Tankabschnitt umfasst, der zwischen der erhabenen Tragstruktur 100 angeordnet ist und die erste Tragkonstruktion 10 und die zweite Tragkonstruktion 20 verbindet. Der Kraftstofftank T kann dazu genutzt werden, ein Fahrerhaus (nicht dargestellt) für das Nutzfahrzug zu tragen und als Unterbau (z.B. Bodenplatte) für das Fahrerhaus zu dienen. Ebenso kann der Kraftstofftank T optional dazu dienen, als Queraussteifungskonstruktion für die Rahmentragstruktur 1 zu wirken.

Die erste Tragkonstruktion 10 und die zweite Tragkonstruktion 20 sind in eine Oberzugkonstruktion und eine Unterzugkonstruktion aufgeteilt, die heckseitig zusammengeführt sind und frontseitig mit dem Kraftstofftank T verbunden sind.

Figur 10 zeigt eine Draufsicht auf die Rahmentragstruktur 1 der Figur 9. Figur 10 ist insbesondere zu entnehmen, dass die Rahmentragstruktur 1 eine dritte längsverlaufende Tragkonstruktion 30 umfasst, die zwischen der ersten Tragkonstruktion 10 und der zweiten Tragkonstruktion 20 und unter deren Niveau verläuft. Die dritte Tragkonstruktion 30 dient dazu, den Kraftstofftank T und die Motoreinrichtung E abzustützen.

## Patentansprüche

1. Rahmentragstruktur (1) für ein Nutzfahrzeug, insbesondere Lastkraftwagen, vorzugsweise Sattelzugmaschine, mit:
- einer ersten längsverlaufenden Tragkonstruktion (10) und einer zweiten längsverlaufenden Tragkonstruktion (20), die in Querrichtung (QR) der Rahmentragstruktur (1) voneinander beabstandet sind,
- zwei Radaufhängungen (RA) für Vorderräder (Rv) für das Nutzfahrzeug, und
- zumindest einer Tankeinrichtung (T) zur Fluidaufnahme, wobei
- die erste Tragkonstruktion (10) und die zweite Tragkonstruktion (20) nach oben geführt sind, um eine erhabene Tragstruktur (100) auszubilden, **dadurch gekennzeichnet, dass**
- die Tankeinrichtung (T) dazu dient, ein Fahrerhaus für das Nutzfahrzeug oder zumindest Teile davon zu tragen, und/oder als Unterbau für das Fahrerhaus dient.

2. Rahmentragstruktur (1) nach Anspruch 1, **dadurch gekennzeichnet, dass** die erhabene Tragstruktur (100) zwischen Vorderrädern (Rv) für das Nutzfahrzeug verläuft und vorzugsweise eine vordere Tragstruktur bildet, die über die Radmittelpunkte (Rmv) der Vorderräder (Rv) nach vorne hinaus ragt.

3. Rahmentragstruktur (1) nach Anspruch 1 oder 2, **dadurch gekennzeichnet, dass** die erhabene Tragstruktur (100) dazu dient, ein Fahrerhaus für das Nutzfahrzeug zu tragen.

4. Rahmentragstruktur (1) nach einem der vorhergehenden Ansprüche, **dadurch gekennzeichnet, dass** die erhabene Tragstruktur (100) über Feder- und/oder Dämpferelementen der Radaufhängungen (RA) verläuft und dazu dient, Kräfte aus den Feder- und/oder Dämpferelementen aufzunehmen.

5. Rahmentragstruktur (1) nach Anspruch 4, **dadurch gekennzeichnet, dass** die Kräfte aus den Feder- und/oder Dämpferelementen von unten in die erhabene Tragstruktur (100) einleitbar sind.

6. Rahmentragstruktur (1) nach einem der vorhergehenden Ansprüche, **dadurch gekennzeichnet, dass** die erhabene Tragstruktur (100) zusätzlich nach seitlich innen geführt ist, um eine verschmälerte Tragstruktur zu bilden.

7. Rahmentragstruktur (1) nach einem der vorhergehenden Ansprüche, **dadurch gekennzeichnet, dass** die erhabene Tragstruktur (100) zusätzlich nach seitlich außen geführt ist, um eine aufgeweitete Tragstruktur zu bilden.

8. Rahmentragstruktur (1) nach einem der vorhergehenden Ansprüche, **dadurch gekennzeichnet, dass** die erste Tragkonstruktion (10) und die zweite Tragkonstruktion (20) eine vertiefte Tragstruktur (200) ausbilden, die in Längsrichtung (LR) der Rahmentragstruktur (1) hinter der erhabenen Tragstruktur (100) verläuft und eine mittlere und/oder hintere Tragstruktur bildet.

9. Rahmentragstruktur (1) nach einem der vorhergehenden Ansprüche, **dadurch gekennzeichnet, dass** die Rahmentragstruktur (1) eine dritte längsverlaufende Tragkonstruktion (30) umfasst, die mit den Radaufhängungen (RA) verbunden ist und zwischen der erhabenen Tragstruktur (100) und unter deren Niveau verläuft.

10. Rahmentragstruktur (1) nach Anspruch 9, **dadurch gekennzeichnet, dass** die dritte Tragkonstruktion (30) mit Lenkelementen der Radaufhängungen (RA) verbunden ist und dazu dient, Kräfte aus den Lenkelementen aufzunehmen.

11. Rahmentragstruktur (1) nach einem der vorhergehenden Ansprüche, **dadurch gekennzeichnet, dass** die erste Tragkonstruktion (10) und die zweite Tragkonstruktion (20) mittels eines vorzugsweise durchlaufenden, einstückigen S-Schlags nach oben, nach seitlich innen und/oder nach seitlich außen geführt sind.

12. Rahmentragstruktur (1) nach einem der vorhergehenden Ansprüche, **dadurch gekennzeichnet, dass** die Tankeinrichtung (T) als mittragender Teil der Rahmentragstruktur (1) ausgeführt ist.

13. Rahmentragstruktur (1) nach einem der vorhergehenden Ansprüche, **dadurch gekennzeichnet, dass** die Tankeinrichtung (T) zumindest abschnittsweise zwischen der erhabenen Tragstruktur (100) angeordnet ist und einen Teil der erhabenen Tragstruktur (100) bildet.

14. Rahmentragstruktur (1) nach einem der vorhergehenden Ansprüche, **dadurch gekennzeichnet, dass** die Tankeinrichtung (T) die erste Tragkonstruktion (10) mit der zweiten Tragkonstruktion (20) verbindet und im Wesentlichen hohlplattenförmig ausgeführt ist.

15. Rahmentragstruktur (1) nach einem der vorhergehenden Ansprüche, **dadurch gekennzeichnet, dass** die Rahmentragstruktur (1) mit einer im Wesentlichen hohlplattenförmigen Queraussteifungskonstruktion (41) versehen ist, die zugleich als Lufttank für das Nutzfahrzeug dient.

16. Nutzfahrzeug, insbesondere Lastkraftwagen, vorzugsweise Sattelzugmaschine, **gekennzeichnet durch** eine Rahmentragstruktur (1) nach einem der vorhergehenden Ansprüche.

## Claims

1. Supporting frame structure (1) for a utility vehicle, in particular heavy goods vehicle, preferably semitrailer tractor, having:
- a first longitudinally running supporting construction (10) and a second longitudinally running supporting construction (20), said supporting constructions being spaced apart from one another in a transverse direction (QR) of the supporting frame structure (1),
- two wheel suspension units (RA) for front wheels (Rv) for the utility vehicle, and
- at least one tank unit (T) for accommodating fluid, wherein
- the first supporting construction (10) and the second supporting construction (20) are guided upwards so as to form a raised supporting structure (100) ,
**characterized in that**
- the tank unit (T) serves for supporting a driver's cab for the utility vehicle or at least parts thereof, and/or serves as a substructure for the driver's cab.

2. Supporting frame structure (1) according to Claim 1, **characterized in that** the raised supporting structure (100) runs between front wheels (Rv) for the utility vehicle and preferably forms a front supporting structure which projects forwards beyond the wheel central points (Rmv) of the front wheels (Rv).

3. Supporting frame structure (1) according to Claim 1 or 2, **characterized in that** the raised supporting structure (100) serves for supporting a driver's cab for the utility vehicle.

4. Supporting frame structure (1) according to one of the preceding claims, **characterized in that** the raised supporting structure (100) runs above spring and/or damper elements of the wheel suspension units (RA) and serves for absorbing forces from the spring and/or damper elements.

5. Supporting frame structure (1) according to Claim 4, **characterized in that**
the forces from the spring and/or damper elements can be introduced into the raised supporting structure (100) from below.

6. Supporting frame structure (1) according to one of the preceding claims, **characterized in that** the raised supporting structure (100) is additionally guided laterally inwards so as to form a narrowed supporting structure.

7. Supporting frame structure (1) according to one of the preceding claims, **characterized in that** the raised supporting structure (100) is additionally guided laterally outwards so as to form a widened supporting structure.

8. Supporting frame structure (1) according to one of the preceding claims, **characterized in that** the first supporting construction (10) and the second supporting construction (20) form a lowered supporting structure (200) which runs behind the raised supporting structure (100) in the longitudinal direction (LR) of the supporting frame structure (1) and forms a central and/or rear supporting structure.

9. Supporting frame structure (1) according to one of the preceding claims, **characterized in that** the supporting frame structure (1) comprises a third longitudinally running supporting construction (30) which is connected to the wheel suspension units (RA) and runs between the raised supporting structure (100) and below the level thereof.

10. Supporting frame structure (1) according to Claim 9, **characterized in that** the third supporting construction (30) is connected to steering elements of the wheel suspension units (RA) and serves for absorbing forces from the steering elements.

11. Supporting frame structure (1) according to one of the preceding claims, **characterized in that** the first supporting construction (10) and the second supporting construction (20) are guided upwards, laterally inwards and/or laterally outwards by means of a preferably continuous, single-piece S-bend.

12. Supporting frame structure (1) according to one of the preceding claims, **characterized in that** the tank unit (T) is formed as a jointly supporting part of the supporting frame structure (1).

13. Supporting frame structure (1) according to one of the preceding claims, **characterized in that** the tank unit (T) is arranged at least in sections between the raised supporting structure (100) and forms a part of the raised supporting structure (100).

14. Supporting frame structure (1) according to one of the preceding claims, **characterized in that** the tank unit (T) connects the first supporting construction (10) to the second supporting construction (20) and is substantially of hollow plate form.

15. Supporting frame structure (1) according to one of the preceding claims, **characterized in that** the supporting frame structure (1) is provided with a transverse stiffening construction (41) which is substantially of hollow plate form and which simultaneously serves as an air tank for the utility vehicle.

16. Utility vehicle, in particular heavy goods vehicle, preferably semitrailer tractor, **characterized by** a supporting frame structure (1) according to one of the preceding claims.

## Revendications

1. Structure de support de châssis (1) pour un véhicule utilitaire, en particulier un poids-lourd, de préférence un tracteur de semi-remorque, comprenant :
- une première construction portante (10) s'étendant longitudinalement et une deuxième construction portante (20) s'étendant longitudinalement, qui sont espacées l'une de l'autre dans la direction transversale (QR) de la structure de support de châssis (1),
- deux suspensions de roue (RA) pour roues avant (Rv) pour le véhicule utilitaire, et
- au moins un dispositif de réservoir (T) destiné à recevoir un fluide,
dans laquelle
- la première construction portante (10) et la deuxième construction portante (20) sont guidées vers le haut pour former une structure portante en relief (100) ,
**caractérisée en ce que**
- le dispositif de réservoir (T) sert à supporter une cabine de conducteur pour le véhicule utilitaire ou au moins des parties de celle-ci et/ou sert de structure sous-jacente pour la cabine de conducteur.

2. Structure de support de châssis (1) selon la revendication 1, **caractérisée en ce que** la structure portante en relief (100) s'étend entre des roues avant (Rv) pour le véhicule utilitaire, et forme de préférence une structure portante avant qui dépasse vers l'avant au-delà des centres de roue (Rmv) des roues avant (Rv).

3. Structure de support de châssis (1) selon la revendication 1 ou 2, **caractérisée en ce que** la structure portante en relief (100) sert à supporter une cabine de conducteur pour le véhicule utilitaire.

4. Structure de support de châssis (1) selon l'une des revendications précédentes, **caractérisée en ce que** la structure portante en relief (100) s'étend au-dessus d'éléments de ressorts et/ou d'amortisseurs des suspensions de roue (RA) et sert à absorber des forces provenant des éléments de ressorts et/ou d'amortisseurs.

5. Structure de support de châssis (1) selon la revendication 4, **caractérisée en ce que** les forces provenant des éléments de ressorts et/ou d'amortisseurs peuvent être introduites par le bas dans la structure portante en relief (100).

6. Structure de support de châssis (1) selon l'une des revendications précédentes, **caractérisée en ce que** la structure portante en relief (100) est en outre guidée latéralement vers l'intérieur, afin de former une structure portante rétrécie.

7. Structure de support de châssis (1) selon l'une des revendications précédentes, **caractérisée en ce que** la structure portante en relief (100) est en outre guidée latéralement vers l'extérieur, afin de former une structure portante élargie.

8. Structure de support de châssis (1) selon l'une des revendications précédentes, **caractérisée en ce que** la première construction portante (10) et la deuxième construction portante (20) forment une structure portante renfoncée (200) qui s'étend derrière la structure portante en relief (100) dans la direction longitudinale (LR) de la structure de support de châssis (1) et forme une structure portante centrale et/ou arrière.

9. Structure de support de châssis (1) selon l'une des revendications précédentes, **caractérisée en ce que** la structure de support de châssis (1) comporte une troisième construction portante (30) s'étendant longitudinalement qui est reliée aux suspensions de roue (RA) et s'étend entre la structure portante en relief (100) et sous son niveau.

10. Structure de support de châssis (1) selon la revendication 9, **caractérisée en ce que** la troisième construction portante (30) est reliée à des éléments de direction des suspensions de roue (RA) et sert à absorber des forces provenant des éléments de direction.

11. Structure de support de châssis (1) selon l'une des revendications précédentes, **caractérisée en ce que** la première construction portante (10) et la deuxième construction portante (20) sont guidées vers le haut, latéralement vers l'intérieur et/ou latéralement vers l'extérieur au moyen d'une courbure en S, d'une seule pièce, de préférence continue.

12. Structure de support de châssis (1) selon l'une des revendications précédentes, **caractérisée en ce que** le dispositif de réservoir (T) est réalisé comme partie co-portante de la structure de support de châssis (1).

13. Structure de support de châssis (1) selon l'une des revendications précédentes, **caractérisée en ce que** le dispositif de réservoir (T) est disposé au moins dans certaines parties entre la structure portante en relief (100) et forme une partie de la structure portante en relief (100).

14. Structure de support de châssis (1) selon l'une des revendications précédentes, **caractérisée en ce que** le dispositif de réservoir (T) relie la première construction portante (10) à la deuxième construction portante (20) et est réalisé sensiblement en forme de plaque creuse.

15. Structure de support de châssis (1) selon l'une des revendications précédentes, **caractérisée en ce que** la structure de support de châssis (1) est dotée d'une construction de raidissement transversale (41) sensiblement en forme de plaque creuse, qui sert en même temps de réservoir d'air pour le véhicule utilitaire.

16. Véhicule utilitaire, en particulier poids-lourd, de préférence tracteur de semi-remorque, **caractérisé par** une structure de support de châssis (1) selon l'une des revendications précédentes.
